# EUROPEAN PATENT APPLICATION

(11) **EP 2 269 474 A2**
(43) Date of publication of application: **05.01.2011**
(21) Application number: 10006592.9
(22) Date of filing: 24.06.2010
(51) Int. Cl.: A23L 3/375

(54) **Method and apparatus for ultrasonic freezing**

(30) Priority: 01.07.2009 US 495829
(71) Applicant: Linde Aktiengesellschaft, 80331 München (DE)
(72) Inventor: McCormick, Stephan A., Warrington, PA 18976 (US); Zhai, Suling, RG6 4AU Reading, (GB)
(74) Representative: Gellner, Bernd

(57) **Abstract**

An apparatus for reducing a temperature of a product includes a housing in which cryogenic fluid is provided for being exposed to the product, and at least one ultrasonic transducer assembly disposed in the housing for generating ultrasonic energy to contact the cryogenic fluid and a surface of the product to facilitate heat transfer at the surface of the product. The cryogenic fluid can be selected from nitrogen and carbon dioxide.

## Description

The embodiments relate to freezing of products, such as for example food products, in immersion and convection freezing systems.

The embodiments of the invention relate to an apparatus for reducing a temperature of a product, comprising a container; a cryogenic substance provided to the container to reduce a temperature of at least a surface of the product; an ultrasonic transducer assembly disposed at the container in spaced relation from the product, the ultrasonic transducer assembly providing ultrasonic energy to the cryogenic substance to induce cavitation for destroying nucleation at the surface of the product during exposure to the cryogenic substance.

The embodiments of the invention further relate to a method of reducing a temperature of a product, comprising exposing a surface of the product to a cryogenic substance for heat transfer at said surface; providing ultrasonic energy to the cryogenic substance and the product to induce cavitation for destroying nucleation at the surface of the product.

Preferred embodiments of the invention are disclosed in the dependent claims.

According to another embodiment the invention relates to an apparatus for reducing a temperature of a product, comprising a housing in which cryogenic fluid is provided for being exposed to the product and at least one ultrasonic transducer assembly disposed in the housing for generating ultrasonic energy to contact the cryogenic fluid and a surface of the product to facilitate heat transfer at the surface of the product.

The cryogenic fluid preferably comprises a liquid bath, nitrogen, a fog and/or a fog comprising nitrogen.

For a more complete understanding of the present embodiments, reference may be had to the detailed description which follows taken in conjunction with the drawings, of which:

FIG. 1 is a side view of one embodiment of the invention;

FIG. 2 is a side view of another embodiment of the invention; and

FIG. 3 is a view of a portion of an alternative embodiment from that shown in FIG. 2.

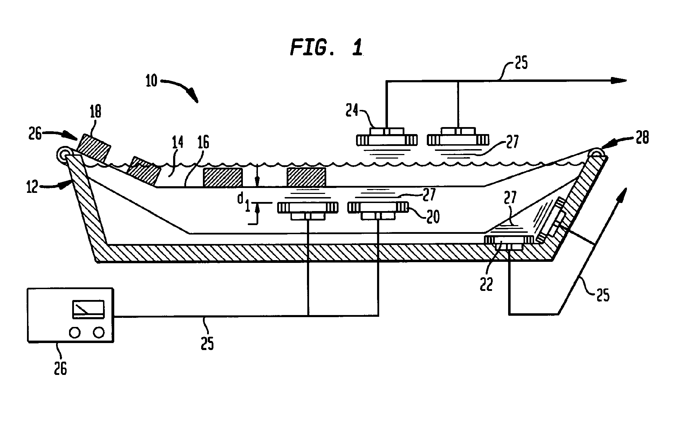

FIGS. 1-3 show ultrasonic immersion and convection tunnel freezing system embodiments to prepare and treat products, such as food products for example, for subsequent processing.

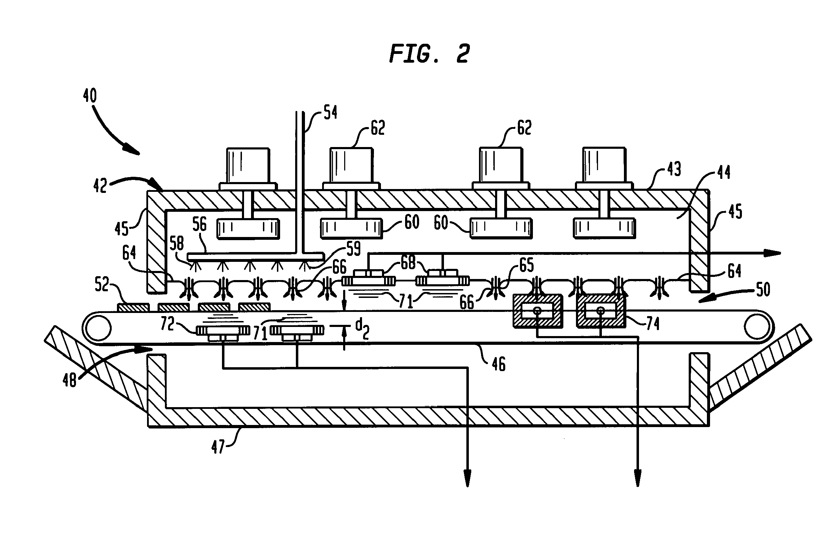

Referring to FIG. 1, an immersion freezer embodiment is shown generally at 10. The freezer 10 may be constructed as a container which includes an insulated sidewall 12 in which a bath 14 of liquid nitrogen (N₂) is disposed and contained. A conveyor belt 16 extends through the bath 14 to deliver products 18, such as for example food products, through the bath 14. (As shown in FIG. 2, the sidewall 12 may be extended to form the container as a housing covering the bath 14, and provide an inlet and outlet for the belt 16 at the housing.) The conveyor belt 16 is constructed and arranged to accommodate different types and sizes of the product 18 to be immersed into the bath 14. That is, depending upon the product 18, regardless of whether it is a food product or otherwise, the conveyor belt 16 can be adjusted such that all of the product 18 is immersed in the bath 14, or only a select portion of the product 18 is immersed in the bath 14. Residence time of the product 18 in the bath 14 will be determined by the particular product to be frozen. Such construction for the conveyor belt 16 may be of wire mesh or slat-like longitudinal members having spaces therebetween for the cryogenic bath to more readily access and contact the product 18.

Ultrasonic transducers arranged singly, in pairs or in any other numerical combinations and arrangements, are disposed with respect to the system 10. A transducer 20 may be disposed in the liquid nitrogen bath 14 either alone, or as a pair or any number of transducers 20. Depending upon the volume and the dimensions of the housing 12 for the bath 14, there may be a plurality of pairs of the transducers 20. Similarly, transducers 22 may be mounted singly or as a pair or any number of transducers 22 at an inner sidewall of the housing 12 for exposure as well to the nitrogen bath 14. A transducer 24 may be disposed above the nitrogen bath 14 either singly or as a pair of transducers 24. With respect to the transducers 20-24, any number of ultrasonic transducers may be employed depending upon the particular freezing application, the size and depth of the liquid nitrogen bath 14, and the physical characteristics of the product 18 being processed.

The transducers 20-24 are connected, as shown generally at 25, to an ultrasonic generator 26, which in turn is connected to and can be controlled by a controller device (not shown). The system 10 is provided with an inlet 26 and an outlet 28 for the conveyor belt 16, and hence the product 18 for introduction into and out of the bath 14.

In operation, the product 18 such as for example a food product, is loaded on the conveyor belt 16 and introduced by the conveyor belt 16 in a batch or continuous process into the liquid nitrogen bath 14. Upon contact of the product 18 with the liquid nitrogen bath 14, heat transfer occurs and boil off is immediate. Such heat transfer of the product 18 and boil off in the bath 14 causes nucleation, which is the formation of extremely small nitrogen gas bubbles at the surface of the product 18 exposed to the liquid nitrogen in the bath 14. As the bubbles rapidly increase in number, they provide a shielding effect and create a boundary layer at a surface of the product 18, in effect insulating or encapsulating the product in a multiplicity of nitrogen gas bubbles which substantially reduces heat transfer effectiveness at the surface of the product 18.

Accordingly, prior to or upon entry of the product 18 into the bath 14 one or more of the ultrasonic transducers 20-24 are actuated, such that sound waves 27 provide cavitation to counteract the nucleation, i.e. the cavitation destroys the bubbles and boundary layer created by the nucleation to thereby prevent the formation of an insulatory bubble or gas layer at the surface of the product 18 so that heat transfer at the surface is not reduced by the nucleation. The efficiency and effectiveness of this process is further realized by the product being directly exposed and in contact with the liquid nitrogen bath 14 and the ultrasonic waves 27 throughout the process while the waves are in contact the with product 18. In other words, in the present embodiment the product 18 is directly exposed to the liquid nitrogen in the bath 14 so that the cavitation with respect to the nucleation is complete and total. Heat transfer is also increased by way of microstreaming which means that as gas bubbles at the surface of the product are rapidly destroyed by ultrasonic energy, pulses of high pressure gas are released which increase surface heat transfer.

As shown in FIG. 1, the transducers 20-24 can be arranged in the liquid nitrogen bath 14 or in the atmosphere above the bath 14, such as is shown with the transducers 24. The effectiveness of the ultrasonic energy to provide cavitation and destroy nucleation is increased the closer the transducers 20-24 are to the liquid nitrogen and the product 18. That is, the transducers 20 are more effective than the transducers 22, which in turn are more effective than the transducers 24. The further away the ultrasonic transducers 20-24 are from the product 18, the more energy is required to provide the sonic energy to the product 18, which of course translates into a higher cost to operate the system. In addition, and by way of example only, a distance d1 of 30 mm is provided between the product 18 and a transmitting surface of the transducers 20-24.

Referring to FIG. 2, a convection tunnel embodiment is shown generally at 40 having ultrasonic transducers. The embodiment includes a housing 42. The housing includes a top 43, sidewalls 45 and a bottom 47, which define a chamber 44 disposed therein. A conveyor belt 46 extends from an inlet 48 to an outlet 50 of the housing 42. The housing 42 may be insulated.

Product 52, such as food product, is transported along the conveyor belt 46 between the inlet 48 to the outlet 50 of the housing 42. Cryogenic liquid, such as nitrogen (N₂) or carbon dioxide (CO₂), is delivered from a remote source (not shown) through a conduit 54 which extends into the chamber 44 of the housing 42 and is connected to a manifold 56 having one or a plurality of spray nozzles 58 extending therefrom. The cryogenic liquid nitrogen or carbon dioxide is transported through the conduit 54 into the manifold 56 for being distributed in gaseous or liquid phase jets 59 from the spray nozzles 58 into the chamber 44. Fans 60, impellers, blowers or a combination of such, in the chamber 44 are connected to corresponding motors 62 for circulating the cryogen liquid in the chamber 44.

Disposed between the manifold 56 and the conveyor belt 46 is an impingement plate 64 having a plurality of a jet nozzle apertures 65 arranged therein. The impingement plate 64 may be arranged to extend across an entire length of the chamber 44, thereby segregating a portion of the chamber from the conveyor belt 46. Ultrasonic transducers 68 are arranged in the chamber 44 proximate the impingement plate 64. The ultrasonic transducers 68 provide ultrasonic energy proximate the impingement plate 64. The cryogenic liquid spray 66 being sprayed by the impingement jet nozzles 65 is directed toward the product 52. The ultrasonic energy will atomize the liquid cryogen spray 66 into a fog, for example a nitrogen fog. CO₂ will be injected in a solid state, for increased heat transfer at the product 52 surface. Similar to the embodiment of FIG. 1, the ultrasonic energy destroys any nucleation of the cryogenic bubbles that may form at the surface of the product 52. The microstreaming effect will also occur at this stage with this embodiment.

Other embodiments of the system embodiment 40 of FIG. 2 include arranging ultrasonic transducers 72 beneath the conveyor belt 46 or alternatively arranging ultrasonic transducers 74 proximate a side of the conveyor belt 46. It should be understood that use of the transducer 68, 72, 74 is not limited to one of each, but rather the transducers 68, 72, 74 may be arranged singly, in pairs or in any combination arranged within the housing 42.

In operation the product 52 or products are loaded onto the conveyor belt 46 and transferred from the inlet 48 into the housing 42 of the system 40 for treatment at the chamber 44 prior to being removed at the outlet 50. In the chamber 44, the fans 60 circulate the cryogenic jet spray 59 emitted from the spray nozzles 58 for circulation in the chamber 44. The jet spray 59 from the spray nozzles 58 is forced toward the impingement plate 64 and accordingly through the impingement nozzle 65 or nozzles to provide the spray 66 of the cryogenic substance to contact a surface of the product 52. The transducers 68, 72, 74, regardless of their number and disposition within the chamber 44, are actuated to provide ultrasonic waves 71 to the cryogen spray 66 to provide a cryogenic fog (when nitrogen is used) from the spray at the surface of the product 52. The ultrasonic wave 71 energy will also destroy the boundary layer of any gas that surrounds the product 52 surface and which inhibits freezing of the product. This causes a high heat transfer effect, as it does with the embodiment of FIG. 1, to provide for a rapid crusting of the surface of the product 52 for subsequent treatment or processing.

The transducers 68, 72, 74 are at a select distance from the product 52, which by way of example only, is a distance d2 of not more than 30 mm. Of course, the distance d2 can be selected depending upon the type and amount of the product 52 being crust frozen, the residence time of the product 52 when being subjected to the cryogen, and the size and number of the transducers 68, 72, 74 being employed in the housing.

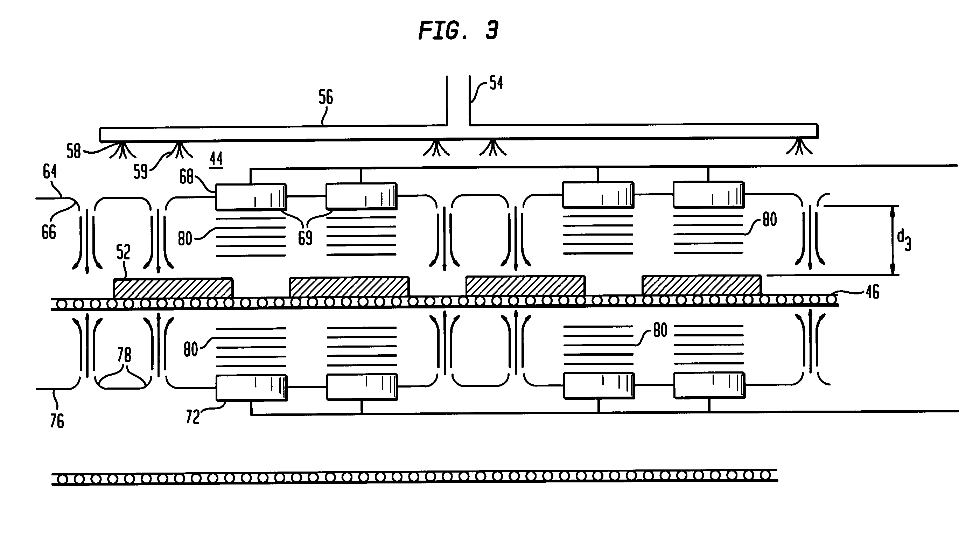

FIG. 3 shows an alternate embodiment of that which is shown in FIG. 2 with respect to the disposition of ultrasonic transducers for the freezing operation. As shown in FIG. 3, the conduit 54 is connected to the manifold 56 from which the nozzles 58 provide the spray 59 of the cryogen fluid, such as either liquid nitrogen or carbon dioxide, into the chamber 44. The conveyor belt 46 extends and travels through the chamber 44 for transporting the product 52 through the chamber for the freezing operation. The conveyor belt 46 shown in FIG. 3 may be of construction similar to the conveyor belt shown in FIG. 2 and the conveyor belt 16 of FIG. 1. Such construction for the conveyor belt 46 may be of wire mesh or slat-like longitudinal members having spaces therebetween for the cryogenic liquid spray to access and contact the product 52.

The impingement plate 64 with the impingement jet nozzle apertures 66 are constructed and arranged to accommodate the ultrasonic transducers 68. The transducers 68 are arranged above the conveyor belt 46 parallel or alternatively aligned with the impingement plate 64. A distance d3 between a transmission surface 69 of the transducer 68 to the product 52 is 30 mm by way of example only.

The transducer 72 or transducers may also be disposed beneath the conveyor belt 46 to provide ultrasonic energy from below the product 52. Another impingement plate 76 with impingement jet apertures 78 can be arranged beneath the conveyor belt 46, with the transducers 72 arranged in parallel or alternatively aligned with the impingement plate 76. Sound waves 80 generated from the transducers 68, 72 are therefore able to be directed toward a lower surface as well of the product 52. The distance d3 would also be selected, measured from the transmission surface of the transducer 72 to the product 52. As with FIG. 2, the embodiment of FIG. 3 with the arrangement of the transducer 68, 72 provides for the atomization of the cryogen liquid spray to create a cryogen fog when nitrogen is used to increase the heat transfer at a surface of the product 52 and to reduce a boundary layer at the product surface to increase convective surface heat transfer.

With all embodiments discussed above with respect to FIGS. 1-3, the products 18, 52 may be for example metal parts and components, or food products such as for example food items as large as chicken patties and chicken cutlets. For all the embodiments described above, the freezer apparatus may be a liquid cryogen immersion bath, a freezing tunnel, a fluidized bed or any combination thereof. In that regard, the embodiments also provide for an "in-line (post-cooling) process", wherein for example the inlet 48 of the convection tunnel is connected to the outlet 28 of the immersion freezer 10 and the respective embodiments are fabricated as modules. The embodiments described above may also be used on the products 18, 52 that are metallic or alloy products that require quenching.

For the convective tunnel embodiment of FIGS. 2 and 3, the sound waves 80 may actually contact the product 52.

The embodiments may also be provided with a closed-loop cryogen delivery system having control valves to enable to continuous or pulse jets of cryogen flow to the chamber 44, wherein a portion of the evaporated/sublimed cryogen can be recycled as additional intake for cryogen impingement.

During operation of any of the embodiments above, power for the ultrasound produced by the transducers 20-24, 68, 72, 74 may have a frequency of approximately 20-200 kiloHertz (kHz), such as for example 20-30 kHz. The power intensity of the transducers is also tunable, such as for example tuning to the range of 1-50 kW/m2. The direction of the ultrasonic field emitted from the transducers 20-24 and 68, 72, 74 and sensors to trigger the transducers upon entry of the product 18, 52 into the bath 14 or chamber 44, respectively, can be adjusted depending upon particulars of the products 18, 52 to be treated. Exposure time for the products to one pulse of ultrasonic energy would be approximately a minimum of 0.5 second, while the interval between ultrasonic energy pulses would be adjusted according to the speed of advance of the conveyor belt 16, 46. The ultrasonic transducers 20-24 and 68, 72, 74 may be magnetostrictive or piezoelectric. In certain freezing applications, it may be necessary to precool the product 18, 52 to a temperature of approximately 1-5°C lower than the products freezing point. In a precooling application, the product 18, 52 could be subcooled to below its normal freezing point, then ultrasonic energy could be used to induce a rapid freeze throughout the product.

It will be understood that the embodiments described herein are merely exemplary and that a person skilled in the art may make many variations and modifications without departing from the spirit and scope of the invention. All such variations and modifications are intended to be included within the scope of the invention as described and claimed herein. It should be understood that the embodiments described herein are not only in the alternative, but may be combined.

## Claims

1. An apparatus for reducing a temperature of a product, comprising:
a container;
a cryogenic substance provided to the container to reduce a temperature of at least a surface of the product;
an ultrasonic transducer assembly disposed at the container in spaced relation from the product, the ultrasonic transducer assembly providing ultrasonic energy to the cryogenic substance to induce cavitation for destroying nucleation at the surface of the product during exposure to the cryogenic substance.

2. The apparatus according to claim 1, further comprising a conveyor assembly for moving the product through the container for the surface of the product to be exposed to the cryogenic substance.

3. The apparatus according to claim 1 or 2, wherein the container comprises an immersion bath for the cryogenic substance through which the conveyor and product are moved.

4. The apparatus according to any of claims 1 to 3, wherein the ultrasonic transducer assembly is disposed in the immersion bath.

5. The apparatus according to any of claims 1 to 4, wherein the ultrasonic transducer assembly is mounted to a sidewall of the container.

6. The apparatus according to any of claims 1 to 5, wherein the ultrasonic transducer assembly is mounted above the immersion bath.

7. The apparatus according to any of claims 1 to 6, wherein a transmission surface of the ultrasonic transducer assembly is disposed at a distance of up to 30 mm from the product.

8. The apparatus according to any of claims 1 to 7, wherein the product is selected from a food product and a metallic product.

9. The apparatus according to any of claims 1 to 8, wherein the cryogenic substance comprises nitrogen (N₂).

10. The apparatus according to any of claims 1 to 9, further comprising a housing containing the container, the housing comprising an inlet and an outlet for the conveyor assembly.

11. The apparatus according to any of claims 1 to 10, wherein the ultrasonic transducer assembly is mounted beneath the conveyor assembly.

12. The apparatus according to any of claims 1 to 11, further comprising a barrier disposed in the container and having at least one nozzle through which the cryogenic substance may pass, the barrier aligned with the ultrasonic transducer assembly.

13. A method of reducing a temperature of a product, comprising:
exposing a surface of the product to a cryogenic substance for heat transfer at said surface;
providing ultrasonic energy to the cryogenic substance and the product to induce cavitation for destroying nucleation at the surface of the product.

14. The method according to claim 13, wherein the exposing comprises immersing at least a portion of the surface of the product in the cryogenic substance, and the destroying comprises cavitating the nucleation at the surface of the product.

15. The method according to claim 13 or 14, wherein the exposing comprises spraying the surface of the product with the cryogenic substance selected from nitrogen and carbon dioxide.
